# EUROPÄISCHE PATENTSCHRIFT

(11) **EP 1 783 474 B1**
(45) Veröffentlichungstag und Bekanntmachung des Hinweises auf die Patenterteilung: **28.01.2009**
(21) Anmeldenummer: 05110273.9
(22) Anmeldetag: 02.11.2005
(51) Int. Cl.: G01L 5/28

(54) **Hydraulischer Schlupfsimulator und Verfahren zum Betreiben eines hydraulischen Schlupfsimulators**
Hydraulic slip simulator and method of operating a hydraulic slip simulator
Simulateur hydraulique de glisse et procédé de commande d'un simulateur hydraulique de glisse

(43) Veröffentlichungstag der Anmeldung: 09.05.2007
(73) Patentinhaber: Ford Global Technologies, LLC, Dearborn, MI 48126 (US)
(72) Erfinder: Herzog, Klaus Dr., 51674 Wiehl (DE)
(74) Vertreter: Drömer, Hans-Carsten

(56) Entgegenhaltungen:
- EP-A- 0 246 606
- EP-A- 0 252 246
- EP-A- 1 491 874
- US-A- 5 323 644

## Beschreibung

Die Erfindung betrifft einen hydraulischen Schlupfsimulator zum Überprüfen einer Funktion einer Bremssteuereinheit bei einem Schlupfverhalten eines Antriebstranges.

Aufgrund der zunehmenden Bedeutung von sicherheitstechnischen Einrichtungen in Kraftfahrzeugen gewinnt auch die einwandfreie Funktionsfähigkeit von ABS (Anti-Blockier-System)-Systemen verstärktes Interesse der Automobilindustrie. In der Regel wird ein ABS-System jedoch meist nur als rechnergestützte Simulation überprüft, wobei ein Praxistest unter realen Bedingungen meist hohen Aufwand erfordert, beispielsweise indem ein ABS-System in einem Testfahrzeug auf einer Versuchsstrecke getestet wird.

Ein Beispiel für eine Prüfeinrichtung für Antriebseinheiten ist in der EP 0252246 A2 beschrieben, in der zur Simulation von Schwungmassen bei Tests von Antriebseinheiten (wie kompletten Fahrzeugen, Verbrennungsmotoren, Getrieben, usw.) eine hydrostatische Brems- und Antriebsmaschine in Abhängigkeit von positiven und negativen Beschleunigungen des Drehmoments gesteuert und geregelt wird.

Die EP 1 491 874 A1 betrifft ferner einen Fahrzeugprüfstand mit einer rahmenförmigen Vorrichtung, an der eine Achse des zu untersuchenden Kraftfahrzeugs befestigbar ist. Eine Belastungsmaschine ist mit dem Antriebstrang des Kraftfahrzeugs koppelbar. Die Belastungsmaschine kann den Antriebstrang sowohl antreiben als auch bremsen. Des Weiteren weist der Prüfstand eine kraftschlüssige, direkte oder indirekte Verbindung zwischen Belastungsmaschine und einer Felge eines Kraftfahrzeugrades auf. Hierbei ist jedoch die Untersuchung anhand eines Kraftfahrzeugs vorzunehmen, wodurch sich auch dieses System als unhandlich und platzaufwändig erweist und zusätzlich die Wirkung eines ABS-Systems auf ein einzelnes Rad nur schlecht simuliert werden kann.

US 5,323,644 beschreibt einen Schlupfsimulator mit einen Elektromotor als Antriebsmodul. Ein hydraulisches Antriebmodul wird als eine Alternative erwähnt.

Es ist daher Aufgabe der vorliegenden Erfindung, eine Möglichkeit zu schaffen, um das Steuerverhalten beispielsweise eines ABS-Systems für einzelne Reifen und für eine Vielzahl von möglichen Straßenoberflächenverhältnissen auf einfachere Weise als beim eingangs erläuterten Stand der Technik überprüfen zu können.

Erfindungsgemäß wird diese Aufgabe durch einen hydraulischen Schlupfsimulator zum Überprüfen einer Funktion einer Bremssteuereinheit bei einem Schlupfverhalten eines Antriebstranges dadurch gelöst, daß der hydraulische Schlupfsimulator umfaßt:
- ein Lastmodul, das eine Antriebswelle, eine Bremseinheit und die Bremssteuereinheit umfaßt, wobei die Bremseinheit ausgebildet ist, um ansprechend auf ein Bremssteuersignal der Bremssteuereinheit eine Rotationsbewegung der Antriebswelle zu verzögern; und
- ein hydraulisches Antriebsmodul, das einen Hydraulikkreislauf mit einem ersten Kreislaufzweig und einem zum ersten Kreislaufzweig parallel angeordneten zweiten Kreislaufzweig aufweist, wobei eine Hydraulikpumpe ausgebildet ist, um einen Fluß von Hydraulikflüssigkeit in dem Hydraulikkreislauf zu bewirken, wobei der Hydraulikkreislauf derart ausgebildet ist, daß bei dem Fluß ein erster Teil der Hydraulikflüssigkeit in den ersten Kreislaufzweig fließt und ein zweiter Teil der Hydraulikflüssigkeit in den zweiten Kreislaufzweig fließt,
wobei der erste Kreislaufzweig des Hydraulikkreislaufs einen hydraulischen Motor umfaßt, der ausgebildet ist, um bei einem Druck im Gesamtsystem, bzw. bei anliegendem Druck von Hydraulikflüssigkeit durch den ersten Kreislaufzweig, ein Drehmoment auf die Antriebswelle des Lastmoduls auszuüben und wobei der zweite Kreislaufzweig des Hydraulikkreislaufs ein Druckregelventil umfaßt, das ausgebildet ist, um ansprechend auf ein Stellsignal einer Schlupfsteuereinheit einen Druck im zweiten Kreislaufzweig und somit im Gesamtsystem zu regeln, so daß das auf eine simulierte Fahrbahn übertragbare Bremsmoment der Antriebswelle des Lastmoduls durch das Moment am hydraulischen Motor darstellbar ist und die Funktion der Bremssteuereinheit überprüfbar ist, bzw. ansprechend auf das Stellsignal den Druck und somit das auf die simulierte Fahrbahn übertragbare Bremsmoment, welches gleich dem Moment am hydraulischen Motor ist, zu regeln.

Das Stellsignal des Druckregelventils, welches proportional des übertragbaren Bremsmomentes ist, wird abhängig eines Reifen-Fahrbahn-Kennfeldes, welches als Eingangsgröße den Schlupf hat, gesteuert. Die Schlupfverhältnisse am Rad sind bei dem erfindungsgemäßen Schlupfsimulator durch die Volumenstromverhältnisse in den beiden Kreislaufzweigen dargestellt. Die Summe der Volumenströme ist proportional der simulierten Fahrzeuggeschwindigkeit, wobei der Volumenstrom im ersten Kreislaufzweig proportional der Radumfangsgeschwindigkeit ist.

Ferner schafft die vorliegende Erfindung ein Verfahren zum Betreiben eines hydraulischen Schlupfsimulators zum Überprüfen einer Funktion einer Bremssteuereinheit bei einem Schlupfverhalten eines Antriebstranges, wobei das Verfahren die Schritte umfaßt:
- Bewirken des Flusses, welcher proportional der zu simulierenden Fahrzeuggeschwindigkeit ist, von Hydraulikflüssigkeit in dem Hydraulikkreislauf;
- Ausüben eines Drehmomentes auf die Antriebswelle des Lastmoduls mittels des hydraulischen Motors im ersten Kreislaufzweig, so daß das maximal auf das Lastmodul übertragbare Bremsmoment mit Hilfe des im zweiten Kreislaufzweiges eingestelltem maximalen Drucks am Druckregelventil begrenzt wird; und
- ansprechend auf das Stellsignal des Druckregelventils für das übertragbare Bremsmoment der Schlupfsteuereinheit, Regeln des Druckes im zweiten Kreislaufzweig und somit im Gesamtsystem mittels des Druckregelventils, bzw. ansprechend auf die Volumenstromsignale (Stellsignale) mit der Schlupfsteuereinheit und mit Hilfe des Reifen-Fahrbahn-Kennfeldes, Steuern des Druckes und somit übertragbaren Bremsmomentes mit Hilfe des Druckregelventils im zweiten Kreislaufzweig, woraus sich entsprechend die Volumenströme in beiden Kreislaufzweigen ändern und sich ein neuer Schlupfzustand ergibt.

Der vorliegenden Erfindung liegt die Erkenntnis zugrunde, daß durch die Kopplung eines Lastmoduls und eines hydraulischen Antriebsmoduls mit den beiden parallelen Kreislaufzweigen eine sehr einfache Möglichkeit zum Überprüfen beispielsweise einer ABS-Bremssteuereinheit realisierbar ist. Hierzu kann von einem hydraulischen Motor zunächst ein Fluß von Hydraulikflüssigkeit in den Hydraulikkreislauf bewirkt werden, wobei ein erster Kreislaufzweig einen hydraulischen Motor umfaßt, durch den die Antriebswelle des Lastmoduls angetrieben wird, während im zweiten Kreislaufzweig ein Druckregelventil zur Regelung des Hydraulikdruckes im Gesamtsystem vorhanden ist. Entsprechend der Regelung des Druckes, welcher proportional der übertragbaren Bremskraft bzw. des übertragbaren Bremsmomentes ist, ergibt sich eine Aufteilung der Volumenströme in den beiden Kreislaufzweigen. Der Volumenstrom im ersten Kreislaufzweig treibt den hydraulischen Motor an und ist somit proportional zur Umfangsgeschwindigkeit des Rades. Der gesamte von der Pumpe geförderte Volumenstrom ist proportional zur Fahrzeuggeschwindigkeit, wobei der Volumenstrom im zweiten Kreislaufzweig proportional der Schlupfgeschwindigkeit ist. Auf diese Weise läßt sich bei geeigneter Ansteuerung des Steuerventils durch die Schlupfsteuereinheit ein Antrieb oder ein "Durchrutschen" des Rades simulieren. Hierdurch lassen sich bei geeigneter Ausführung der Schlupfsteuerungseinheit die Fahrt über Fahrbahnen mit unterschiedlicher Oberflächenbeschaffenheiten wie Eis, Aquaplaning oder Sand bzw. unterschiedliche Reifentypen wie z. B. Breitreifen oder Winterreifen nachbilden.

Die ABS-Bremssteuereinheit kann nunmehr auf ihre korrekte Funktionsfähigkeit überprüft werden, indem beispielsweise die Reaktionszeit auf das unterschiedliche Drehverhalten bzw. das sich verändernde Drehmoment der Antriebswelle gemessen wird.

Der erfindungsgemäße hydraulische Schlupfsimulator bietet somit den Vorteil, daß nicht mehr ein aufwändiger Prüfstand zum Testen von einer Bremssteuereinheit notwendig ist, sondern daß eine Überprüfung durch das einfache Einspielen von unterschiedlichen Reifen-Straßenoberflächenverhältnissen in die Schlupfsteuereinheit möglich ist, wobei trotzdem eine Überprüfung unter realistischen Bedingungen durchgeführt werden kann. Auch kann ein derartiger Prüfstand auf einfache Art und Weise zur Fehlerbehebung bzw. zur Verifikation einer Bremssteuereinheit verwendet werden, da dies nunmehr im Labor und nicht mehr nur im Feldversuch möglich ist. Ferner kann auch das Steuerverhalten für einzelne Räder unabhängig von einem Gesamtverhalten eines Kraftfahrzeugs simuliert werden.

Günstig ist es, wenn die Schlupfsteuereinheit ausgebildet ist, um das Stellsignal des Druckregelventils für das übertragbare Bremsmoment auf der Basis von in der Schlupfsteuereinheit gespeicherten Daten über eine Fahrbahroberflächencharakteristik oder auf der Basis von in der Schlupfsteuereinheit gespeicherten Daten über eine Reifencharakteristik zu bestimmen. Dies ermöglicht eine realitätsnahe Simulation von Fahrzuständen in einer Laborumgebung.

Auch kann die Schlupfsteuereinheit ausgebildet sein, um die gespeicherten Daten über eine Fahrbahroberflächencharakteristik oder die gespeicherten Daten über eine Reifencharakteristik zu verändern. Dies ermöglicht durch ein einfaches Einspielen von neuen Reifen- bzw. Fahrbahndaten in die Schlupfsteuereinheit ein sehr schnelle "Umrüsten" des Schlupfsimulators auf eine neue Reifen-Fahrbahncharakteristik.

Weiterhin kann in dem ersten Kreislaufzweig ein erster Fluß-Sensor zum Liefern eines ersten Flußsignals an die Schlupfsteuereinheit angeordnet sein und in dem zweiten Kreislaufzweig ein zweiter Fluß-Sensor zum Liefern eines zweiten Flußsignals an die Schlupfsteuereinheit angeordnet sein, wobei die Schlupfsteuereinheit ferner ausgebildet sein kann, um das Stellsignal des Druckregelventils für das übertragbare Bremsmoment unter Verwendung des ersten und zweiten Flußsignals zu bestimmen. Dies bietet den Vorteil, daß das tatsächlich simulierte Schlupfverhalten mit dem durch die Schlupfsteuereinheit zu simulierenden Schlupfverhalten verglichen werden kann, wobei evtl. eine Anpassung/Korrektur der Öffnung des Steuerventils durchgeführt werden kann.

Ferner kann auch die Hydraulikpumpe ausgebildet sein, um eine Stärke des Flusses von Hydraulikflüssigkeit in dem Hydraulikkreislauf variieren zu können. Dies bietet den Vorteil, neben dem Rutschverhalten am Rad auch eine eventuelle Geschwindigkeitsänderung der Fahrt eines simulierten Fahrzeuges in der Simulation berücksichtigen zu können.

Auch kann der hydraulische Motor einen Drehmomentsensor aufweisen, der ausgebildet ist, um ein Drehmoment der Antriebswelle zu erfassen und wobei die Hydraulikpumpe ausgebildet ist, die Stärke des Flusses von Hydraulikflüssigkeit unter Verwendung des erfassten Drehmoments zu variieren. Dies bietet den Vorteil, den Bremsdruck der Bremseinrichtung auf die Antriebswelle berücksichtigen zu können und somit eine Rückwirkung des Lastmoduls auf das hydraulische Antriebsmodul mitzuerfassen.

In einem bevorzugten Ausführungsbeispiel kann der hydraulische Motor bzw. eine diesem zugeordnete Stelleinheit einen Integrator aufweisen, der ausgebildet ist, um das von dem Drehmomentsensor erfaßte Drehmomentsignal, zu integrieren und somit die simulierte Fahrzeuggeschwindigkeit zu bestimmen, um mit diesem Signal die Stärke des Flusses von Hydraulikflüssigkeit zu variieren, wobei das Drehmomentsignal, welches proportional der simulierten Fahrzeugverzögerung ist, integriert wird, um ein Geschwindigkeitssignal zu erhalten um dieses zum Variieren der Stärke des Flusses von Hydraulikflüssigkeit zu verwenden. Dies ermöglicht die Berücksichtigung von Geschwindigkeitsänderungen eines Fahrzeugs bei der Simulation, die durch eine Wirkung der Bremse hervorgerufen werden.

Auch kann der hydraulische Motor eine hydraulische Axialkolbeneinheit bzw. Axialkolbenmaschine sein, wodurch sich aufgrund der geringen Trägheit einer solchen Axialkolbenmaschine gegenüber anderen Antriebselementen eine zu vernachlässigende Beeinträchtigung der Massenträgheitsverhältnisse des zu testenden Antriebstranges ergibt.

Ferner schafft die vorliegende Erfindung einen hydraulischen Schlupfprüfstand umfassend:
- einen hydraulischen Schlupfsimulator, bei dem an der Antriebswelle ein Fahrzeugrad befestigt ist; und
- eine Datenspeichereinheit, die ausgebildet ist, um Daten eines Steuerungsverhaltens der Bremssteuereinheit während einem Betrieb des hydraulischen Schlupfsimulators aufzuzeichnen.

Dies bietet den Vorteil, daß nunmehr nicht nur eine Simulation des Schlupfes durchgeführt werden kann, sondern eine vollständige Messung bei einem Versuch erfolgen kann, die in einer nachfolgenden Auswertung eine Möglichkeit zur Fehlererkennung der Funktion der Bremssteuereinheit in realitätsnaher Umgebung bietet.

Weitere vorteilhafte Ausgestaltungen der Erfindung sind in den Unteransprüchen und in der folgenden Figurenbeschreibung offenbart. Es zeigt:

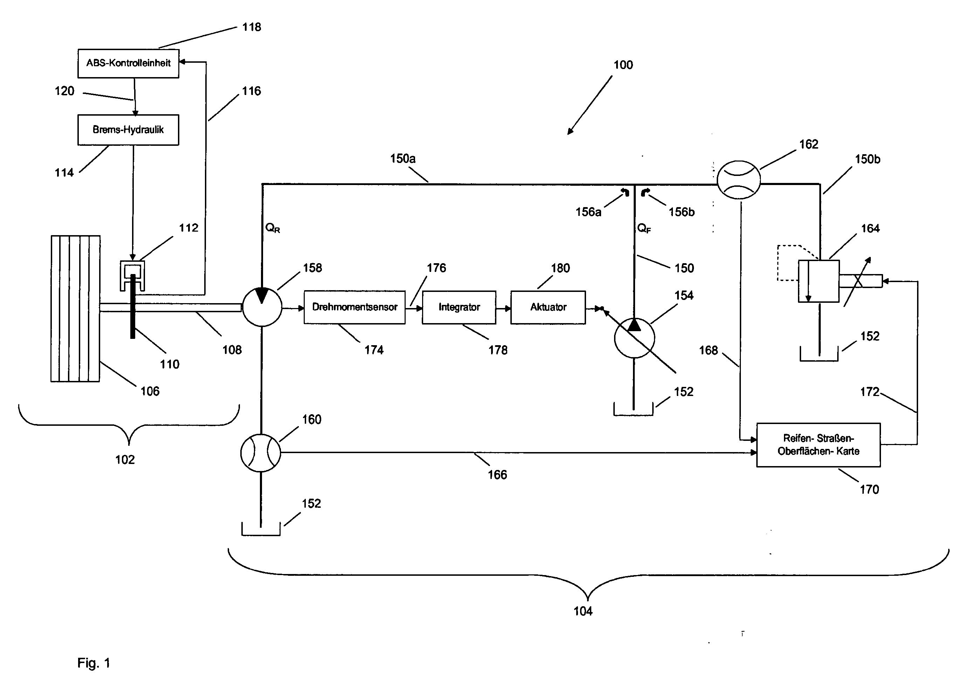

- Fig. 1: ein Blockschaltbild eines Ausführungsbeispiels der vorliegenden Erfindung.

Die Fig. 1 zeigt ein Blockschaltbild eines hydraulischen Schlupfsimulators 100, der ein Lastmodul 102 und ein hydraulisches Antriebsmodul 104 aufweist. Das Lastmodul 102 umfaßt beispielsweise ein Rad 106, welches an einer Antriebswelle 108 befestigt ist. Ferner ist eine Bremsscheibe 110 an der Antriebswelle 108 befestigt, wobei eine Bremseinheit, bestehend aus einem Bremssattel 112 und einer Bremshydraulik 114, auf die Antriebswelle 108 wirken kann. Weiterhin kann von der Antriebswelle 108, der Bremsscheibe 110 oder dem Rad 106 ein Geschwindigkeitssignal 116 ausgelesen und einer (ABS-)Bremssteuereinheit 118 zugeführt werden, welche ein Bremssteuersignal 120 an die Bremshydraulik 114 ausgibt, um eine Rotation der Antriebswelle 108 zu verzögern.

Das hydraulische Antriebsmodul 104 kann einen Hydraulikkreislauf 150 umfassen, der einen ersten Kreislaufzweig 150a und eine zweiten Kreislaufzweig 150b umfaßt. Hierbei kann ein Fluß von Hydraulikflüssigkeit von einem Hydraulikflüssigkeitsreservoir 152 in den Hydraulikkreislauf 150 mittels einer regelbaren Hydraulikpumpe 154 bewirkt werden. Ein erster Teil 156a der Hydraulikflüssigkeit kann in den ersten Kreislaufzweig 150a fließen, während ein zweiter Teil 156b der Hydraulikflüssigkeit in den zweiten Kreislaufzweig 150b fließen kann. Im ersten Kreislaufzweig 150a fließt der erste Teil 156a der Hydraulikflüssigkeit durch einen hydraulischen Motor 158, der derart mit der Antriebswelle 108 gekoppelt ist, daß durch den hydraulischen Motor 158 ein Drehmoment auf die Antriebswelle 108 übertragen werden kann. Weiterhin fließt der erste Teil 156a der Hydraulikflüssigkeit durch einen ersten Flußsensor 160, bevor der erste Teil 156a der Hydraulikflüssigkeit dem Hydraulikflüssigkeitsreservoir 152 zugeführt wird, wodurch der erste Kreislaufzweig 150a geschlossen ist.

Im zweiten Kreislaufzweig 150b fließt ein zweiter Teil 156b der Hydraulikflüssigkeit durch eine zweiten Flußsensor 162, bevor der zweite Teil 156b der Hydraulikflüssigkeit durch das Druckregelventil 164 fließt, wonach dieser Teil der Hydraulikflüssigkeit ebenfalls wieder in das Hydraulikflüssigkeitsreservoir 152 fließt, wodurch auch der zweite Kreislaufzweig 150b geschlossen ist.

Ansprechend auf ein erstes Flußsignal 166 des ersten Flußsensors 160 und auf ein zweites Flußsignal 168 des zweiten Flußsensors 162 kann in einer Schlupfsteuereinheit 170 ein Stellsignal 172 bestimmt werden, welches dem Druckregelventil 164 zugeführt wird.

Ansprechend auf das Stellsignal 172 des Druckregelventils 164 für das übertragbare Bremsmoment kann das Druckregelventil 164 mehr oder weniger öffnen, wodurch ein größerer bzw. kleinerer Teil der Hydraulikflüssigkeit durch den zweiten Kreislaufzweig 150b fließt, anstatt durch den ersten Kreislaufzweig 150a zu fließen. Hierdurch läßt sich ein variierbares Drehmoment auf die Antriebswelle 108 durch den hydraulischen Motor 158 übertragen, da das übertragene Drehmoment abhängig von der Größe des Druckes des Gesamtsystems ist.

Sind in der Schlupfsteuereinheit 170 Daten über Reifen- bzw. Straßenoberflächenverhältnisse gespeichert, kann durch eine entsprechende Verarbeitung dieser Daten mit den Informationen aus dem ersten Flußsignal 166 und dem zweiten Flußsignal 168 das Druckregelventil 164 derart angesteuert werden, daß sich durch den hydraulischen Motor 158 eine Simulation des Schlupfverhaltens realisieren läßt, die dem Verhalten eines Fahrzeugrades auf unterschiedlichen Straßenoberflächenverhältnissen wie beispielsweise Aquaplaning oder Eis entspricht. Hierdurch bietet sich der Vorteil, daß eine realitätsnahe Simulation des Drehmomentverhaltens eines Kraftfahrzeugrades in Laborbedingungen möglich ist, ohne ein Fahrzeug dafür im Feldversuch einsetzen zu müssen.

Für eine weitere Steigerung der Realitätsnähe kann auch das mittels des hydraulischen Motors 158 auf die Antriebswelle 108 übertragene Drehmoment durch einen Drehmomentsensor 174 bestimmt werden. Unter Berücksichtigung des Zusammenhangs, das die Stärke des Flusses der Hydraulikflüssigkeit Q_{F} proportional zu der Fahrzeuggeschwindigkeit ist und die Stärke des Flusses des ersten Teils 156a der Hydraulikflüssigkeit Q_{R} proportional zur Radgeschwindigkeit ist, ergibt sich durch die Drehmomentmessung mittels des Drehmomentsensors 174 die Möglichkeit die Größe der simulierten Verzögerung zu erfassen und somit durch Ingeration die daraus resultierende Fahrzeuggeschwindigkeit zu bestimmen. Dies wird durch einen Integrator (d.h. einem integrierend wirkenden Regelungsglied) 178 realisiert. Das so bestimmte Signal für die Fahrzeuggeschwindigkeit wird an ein Stellglied 180 (Aktuator) weitergeleitet.

Die Flußgeschwindigkeit der Hydraulikflüssigkeit wird im Hydraulikkreislauf 150 durch die regelbare Hydraulikpumpe 154 angepaßt. Hierzu kann beispielsweise die Größe des Schluckvolumens der Hydraulikpumpe 154 verändert werden.

Somit wird deutlich, daß durch einen hydraulischen Schlupfsimulator 100, wie dieser exemplarisch in Fig. 1 dargestellt ist, eine deutliche Verbesserung des Verhaltens von beispielsweise ABS-Bremssteuereinheiten 118 überprüft werden kann, insbesondere dann, wenn in der Schlupfsteuereinheit 170 Daten über verschiedene Reifen-Straßenoberflächenverhältnisse in Form einer Reifen-Straßenoberflächen-Karte abgelegt werden können und beispielsweise das entsprechende Steuerverhalten der ABS-Bremssteuereinheit 118 mitprotokolliert werden kann. Auch bietet der hydraulische Schlupfsimulator den Vorteil, daß nun verschiedene Straßenoberflächencharakteristika (Sandwüste, Eis, Aquaplaning, etc.) und/oder verschiedene Reifentypen (z.B. Winter-, Sommer- Breitreifen) eingespeichert werden können bzw. eingespeicherte Daten verändert werden können.

Auch bietet die Verwendung einer einfachen hydraulischen Maschine (Axialkolbeneinheit, Axialkolbenmaschine) als hydraulischer Motor 158 den Vorteil, daß durch eine relativ geringe Trägheit einer solchen Maschine im Gegensatz zu beispielsweise einem Elektromotor mit der gleichen Drehmomentwirkung nur eine schwache Rückwirkung des hydraulischen Motors auf den Drehmomentübertrag zur Antriebswelle 108 hin zu befürchten ist.

Zusammenfassend ist somit festzustellen, daß mit dem hydraulischen Schlupfsimulator 100 das dynamische Verhalten von beispielsweise ABS-Systemen für jeden Reifen und nahezu jede Straßenoberflächencharakteristik allein durch die Veränderung von Daten in einer (Reifen-Straßenoberflächen)Zuordnungskarte getestet werden kann. Neue Regelschleifen-Kontrolleinheiten für ABS-Systeme können in sehr kurzer Zeit unter realistischen Bedingungen auf einem Prüfstand entwickelt werden. Der Prüfstand ist auch ein leistungsfähiges Werkzeug zur Fehlerbehebung.

Der erfindungsgemäße hydraulische Schlupfsimulator 100 bietet daher einen leichten Weg zum Testen eines ABS-Systems im Labor für jeden einzelnen Reifen und ein Straßenoberflächenverhalten unter reproduzierbaren Bedingungen. Während einer Bremsung eines Fahrzeugs wird das Rad durch die Straßenoberfläche angetrieben und die Bremskraft wirkt dieser Bewegung entgegen. Auf dem hydraulischen Schlupfsimulator 100 treibt ein hydraulischer Motor 158 das Rad an. Eine elektrische Hydraulikpumpe 154 speist den hydraulischen Motor 158. Ein proportionales elektronisch überwachtes Druckentlastungsventil bzw. Steuerventil 164 begrenzt den maximalen Druck in dem System. Auf diese Weise ist der maximale Druck in dem hydraulischen System ein Äquivalent zu der Bremskraft bzw. des Bremsmomentes während einer Bremsung in der Realität. Die Bremskraft bzw. das Bremsmoment hängt von dem Schlupf des Rades ab. Auf dem Prüfstand ist der Fluß Q_{R} durch den hydraulischen Motor 158 proportional zu der Radgeschwindigkeit und der Fluß (= Q_{F} - Q_{R}) durch das Druckentlastungsventil bzw. Steuerventil 164 ist proportional zu der Schlupfgeschwindigkeit. Die Summe Q_{F} von beiden Flüssen ist proportional zu der Fahrzeuggeschwindigkeit. Die Flußsignale 166, 168 werden zu der Prüfstandkontrolleinheit übertragen und der relative Schlupf wird berechnet. Die Abhängigkeit der Zugkraft von dem Schlupf ist in einer Zuordnungskarte abgelegt, so daß das Signal des Druckkontrollventils bzw. Steuerventils 164 berechnet werden kann. Das Bremsdrehmoment des Rades wird gemessen wodurch die Verzögerung des Fahrzeugs berechnet werden kann. Hieran anschließend kann ein Signal, das proportional zu der tatsächlichen Fahrzeuggeschwindigkeit ist, an die elektronisch überwachte Pumpe 154 ausgegeben werden.

Mit dem hydraulischen Schlupfsimulator 100 kann das dynamisch Verhalten von ABS-Systemen für jeden Reifen und jede Straßenoberflächencharakteristik allein durch die Veränderung einer entsprechenden Zuordnungskarte getestet werden. Die Trägheit von hydraulischen Motoren 154 ist sehr gering so daß dieser Einfluß nicht berücksichtigt zu werden braucht. Neue Regelschleifen für ABS-Systeme können auf diese Weise in sehr kurzer Zeit unter realistischen Bedingungen auf dem Prüfstand entwickelt werden. Der Prüfstand ist ebenfalls ein leistungsfähiges Werkzeug zur Fehlerbehebung.

## Patentansprüche

1. Hydraulischer Schlupfsimulator (100) zum Überprüfen einer Funktion einer Bremssteuereinheit (118) bei einem Schlupfverhalten eines Antriebsstranges, wobei der hydraulische Schlupfsimulator (100) umfaßt:
ein Lastmodul (102), das eine Antriebswelle (108), eine Bremseinheit (112, 114) und die Bremssteuereinheit (118) umfaßt, wobei die Bremseinheit (112, 114) ausgebildet ist, um ansprechend auf ein Bremssteuersignal (120) der Bremssteuereinheit (118) eine Rotationsbewegung der Antriebswelle (108) zu verzögern; und
ein hydraulisches Antriebsmodul (104), das einen Hydraulikkreislauf (150) mit einem ersten Kreislaufzweig (150a) und einem zum ersten Kreislaufzweig (150a) parallel angeordneten zweiten Kreislaufzweig (150b) aufweist, wobei eine Hydraulikpumpe (154) ausgebildet ist, um einen Fluß von Hydraulikflüssigkeit in dem Hydraulikkreislauf (150) zu bewirken, wobei der Hydraulikkreislauf (150) derart ausgebildet ist, daß bei dem Fluß ein erster Teil (156a) der Hydraulikflüssigkeit in den ersten Kreislaufzweig (150a) fließt und ein zweiter Teil (156b) der Hydraulikflüssigkeit in den zweiten Kreislaufzweig (150b) fließt,
wobei der erste Kreislaufzweig (150a) des Hydraulikkreislaufs (150) einen hydraulischen Motor (158) umfaßt, der ausgebildet ist, um bei einem Druck im Gesamtsystem ein Drehmoment auf die Antriebswelle (108) des Lastmoduls (102) auszuüben und wobei der zweite Kreislaufzweig (150b) des Hydraulikkreislaufs (150) ein Druckregelventil (164) umfaßt, das ausgebildet ist, um ansprechend auf ein Stellsignal (172) einer Schlupfsteuereinheit (170) einen Druck im zweiten Kreislaufzweig (150b) und somit im Gesamtsystem zu regeln, so daß das simulierte auf die Fahrbahn übertragbare Bremsmoment der Antriebswelle (108) des Lastmoduls (102) durch das Moment am Hydraulikmotor dargestellt wird und die Funktion der Bremssteuereinheit (118) überprüfbar ist.

2. Hydraulischer Schlupfsimulator nach Anspruch 1,
**dadurch gekennzeichnet, daß**
die Schlupfsteuereinheit (170) ausgebildet ist, um das Stellsignal (172) des Druckregelventils für das übertragbare Bremsmoment auf der Basis von in der Schlupfsteuereinheit (170) gespeicherten Daten über eine Fahrbahroberflächencharakteristik oder auf der Basis von in der Schlupfsteuereinheit gespeicherten Daten über eine Reifencharakteristik zu bestimmen.

3. Hydraulischer Schlupfsimulator nach Anspruch 1 oder 2,
**dadurch gekennzeichnet, daß**
die Schlupfsteuereinheit (170) ausgebildet ist, um die in gespeicherten Daten über eine Fahrbahnoberflächencharakteristik oder die gespeicherten Daten über eine Reifencharakteristik zu verändern.

4. Hydraulischer Schlupfsimulator nach einem der Ansprüche 1 bis 3,
**dadurch gekennzeichnet, daß**
in dem ersten Kreislaufzweig (150a) ein erster Fluß-Sensor (160) zum Liefern eines ersten Flußsignals (166) an die Schlupfsteuereinheit (170) angeordnet ist und in dem zweiten Kreislaufzweig (150b) ein zweiter Fluß-Sensor (162) zum Liefern eines zweiten Flußsignals (168) an die Schlupfsteuereinheit (170) angeordnet ist, und wobei die Schlupfsteuereinheit (170) ausgebildet ist, um das Stellsignal (172) des Druckregelventils (164) für das übertragbare Bremsmoment unter Verwendung des ersten Flußsignals (166) und des zweiten Flußsignals (168) zu bestimmen.

5. Hydraulischer Schlupfsimulator nach einem der Ansprüche 1 bis 4,
**dadurch gekennzeichnet, daß**
die Hydraulikpumpe (154) ausgebildet ist, um eine Stärke des Flußes von Hydraulikflüssigkeit in dem Hydraulikkreislauf (150) variieren zu können.

6. Hydraulischer Schlupfsimulator nach einem der Ansprüche 1 bis 5,
**dadurch gekennzeichnet, daß**
der hydraulische Motor (158) ferner einen Drehmomentsensor (174) aufweist, der ausgebildet ist, um ein Drehmoment der Antriebswelle (108) zu erfassen und daß die Hydraulikpumpe (154) ausgebildet ist, die Stärke des Flusses von Hydraulikflüssigkeit unter Verwendung des erfaßten Drehmomentes zu variieren.

7. Hydraulischer Schlupfsimulator nach Anspruch 6,
**dadurch gekennzeichnet, daß**
der hydraulische Motor (158) einen Integrator (178) aufweist, der ausgebildet ist, um das von dem Drehmomentsensor (174) erfaßte Drehmomentsignal (176) zu integrieren und somit die simulierte Fahrzeuggeschwindigkeit zu bestimmen, um mit diesem Signal die Stärke des Flusses von Hydraulikflüssigkeit zu variieren.

8. Hydraulischer Schlupfsimulator nach einem der Ansprüche 1 bis 7,
**dadurch gekennzeichnet, daß**
der hydraulische Motor (158) eine hydraulische Axialkolbeneinheit ist.

9. Hydraulischer Schlupfprüfstand umfassend:
- einen hydraulischen Schlupfsimulator (100) nach einem der Ansprüche 1 bis 8, bei dem an der Antriebswelle (108) ein Fahrzeugrad (106) befestigt ist; und
- eine Datenspeichereinheit, die ausgebildet ist, um Daten eines Steuerungsverhaltens der Bremssteuereinheit (118) während einem Betrieb des hydraulischen Schlupfsimulators (100) aufzuzeichnen.

10. Verfahren zum Betreiben eines hydraulischen Schlupfsimulators (100) nach einem der Ansprüche 1 bis 8 zum Überprüfen einer Funktion einer Bremssteuereinheit (118) bei einem Schlupfverhalten eines Antriebsstranges, umfassend die Schritte
- Bewirken des Flusses von Hydraulikflüssigkeit in dem Hydraulikkreislauf (150);
- Ausüben eines Drehmomentes auf die Antriebswelle (108) des Lastmoduls (102) mittels des hydraulischen Motors (158) im ersten Kreislaufzweig (150a); und
- ansprechend auf das Stellsignal (172) des Druckregelventils (164) für das übertragbare Bremsmoment der Schlupfsteuereinheit (170), Regeln des Druckes im zweiten Kreislaufzweig (150b) und somit im Gesamtsystem mittels des Druckregelventils (164).

## Claims

1. Hydraulic slip simulator (100) for checking a function of a brake control unit (118) with regard to slipping behaviour of a drivetrain, with the hydraulic slip simulator (100) comprising:
a load module (102) which comprises a driveshaft (108), a brake unit (112, 114) and the brake control unit (118), with the brake unit (112, 114) being designed to decelerate a rotational movement of the driveshaft (108) in response to a brake control signal (120) of the brake control unit (118); and
a hydraulic drive module (104) which has a hydraulic circuit (150) with a first circuit branch (150a) and a second circuit branch (150b) which is arranged parallel to the first circuit branch (150a), with a hydraulic pump (154) being formed in order to effect a flow of hydraulic liquid in the hydraulic circuit (150), with the hydraulic circuit (150) being designed such that, as regards the flow, a first part (156a) of the hydraulic liquid flows into the first circuit branch (150a) and a second part (156b) of the hydraulic liquid flows into the second circuit branch (150b),
with the first circuit branch (150a) of the hydraulic circuit (150) comprising a hydraulic motor (158) which is designed to exert a torque on the driveshaft (108) of the load module (102) with a pressure in the entire system, and with the second circuit branch (150b) of the hydraulic circuit (150) comprising a pressure regulating valve (164) which is designed to regulate a pressure in the second circuit branch (150b), and therefore in the entire system, in response to an actuating signal (172) of a slip control unit (170), such that the simulated braking torque of the driveshaft (108) of the load module (102) which can be transmitted to the roadway is represented by the torque at the hydraulic motor, and the function of the brake control unit (118) can be checked.

2. Hydraulic slip simulator according to Claim 1,
**characterized in that**
the slip control unit (170) is designed to determine the actuating signal (172) of the pressure regulating valve for the transmissible brake torque on the basis of data, which is stored in the slip control unit (170), regarding a roadway surface characteristic or on the basis of data, which is stored in the slip control unit, regarding a tyre characteristic.

3. Hydraulic slip simulator according to Claim 1 or 2,
**characterized in that**
the slip control unit (170) is designed to vary the stored data regarding a roadway surface characteristic or the data regarding a tyre characteristic.

4. Hydraulic slip simulator according to one of Claims 1 to 3,
**characterized in that**
a first flow sensor (160) for providing a first flow signal (166) to the slip control unit (170) is arranged in the first circuit branch (150a), and a second flow sensor (162) for providing a second flow signal (168) to the slip control unit (170) is arranged in the second circuit branch (150b), and with the slip control unit (170) being designed to determine the actuating signal (172) of the pressure regulating valve (164) for the transmissible torque using the first flow signal (166) and the second flow signal (168).

5. Hydraulic slip simulator according to one of Claims 1 to 4,
**characterized in that**
the hydraulic pump (154) is designed to be able to vary an intensity of the flow of hydraulic liquid in the hydraulic circuit (150).

6. Hydraulic slip simulator according to one of Claims 1 to 5,
**characterized in that**
the hydraulic motor (158) also has a torque sensor (174) which is designed to measure a torque of the driveshaft (108), and **in that** the hydraulic pump (154) is designed to vary the intensity of the flow of hydraulic liquid using the measured torque.

7. Hydraulic slip simulator according to Claim 6,
**characterized in that**
the hydraulic motor (158) has an integrator (178) which is designed to integrate the torque signal (176) measured by the torque sensor (174) and thereby determine the simulated vehicle speed, in order to vary the intensity of the flow of hydraulic liquid using said signal.

8. Hydraulic slip simulator according to one of Claims 1 to 7,
**characterized in that**
the hydraulic motor (158) is a hydraulic axial piston unit.

9. Hydraulic slip test bed comprising:
- a hydraulic slip simulator (100) according to one of Claims 1 to 8, in which a vehicle wheel (106) is fastened to the driveshaft (108); and
- a data storage unit which is designed to record data of control behaviour of the brake control unit (118) during operation of the hydraulic slip simulator (100).

10. Method for operating a hydraulic slip simulator (100) according to one of Claims 1 to 8 for checking a function of a brake control unit (118) with regard to slipping behaviour of a drivetrain, comprising the steps:
- effecting the flow of hydraulic liquid in the hydraulic circuit (150);
- exerting a torque on the driveshaft (108) of the load module (102) by means of the hydraulic motor (158) in the first circuit branch (150a); and
- regulating the pressure in the second circuit branch (150b), and therefore in the entire system, by means of the pressure regulating valve (164) in response to the actuating signal (172) of the pressure regulating valve (164) for the transmissible braking torque of the slip control unit (170).

## Revendications

1. Simulateur hydraulique de glissement (100) pour contrôler une fonction d'une unité de commande de frein (118) en cas de comportement de glissement d'une chaîne de transmission, le simulateur hydraulique de glissement (100) comprenant :
un module de charge (102), qui comprend un arbre d'entraînement (108), une unité de freinage (112, 114) et l'unité de commande de frein (118), l'unité de freinage (112, 114) étant réalisée pour retarder un mouvement de rotation de l'arbre d'entraînement (108) en réponse à un signal de commande de frein (120) de l'unité de commande de frein (118) ; et
un module d'entraînement hydraulique (104) qui présente un circuit hydraulique (150) avec une première branche de circuit (150a) et une deuxième branche de circuit (150b) parallèle à la première branche de circuit (150a), une pompe hydraulique (154) étant réalisée pour provoquer un flux de liquide hydraulique dans le circuit hydraulique (150), le circuit hydraulique (150) étant réalisé de telle sorte qu'en cas de flux, une première partie (156a) du liquide hydraulique s'écoule dans la première branche de circuit (150a) et une deuxième partie (156b) du liquide hydraulique s'écoule dans la deuxième branche de circuit (150b),
la première branche de circuit (150a) du circuit hydraulique (150) comprenant un moteur hydraulique (158) qui est réalisé de manière à exercer un couple sur l'arbre d'entraînement (108) du module de charge (102) en cas de pression dans l'ensemble du système, et la deuxième branche de circuit (150b) du circuit hydraulique (150) comprenant une soupape de régulation de pression (164) qui est réalisée de manière à réguler une pression dans la deuxième branche de circuit (150b) et donc dans l'ensemble du système en réponse à un signal de commande (172) d'une unité de commande de glissement (170), de sorte que le couple de freinage simulé de l'arbre d'entraînement (108) du module de charge (102) pouvant être transmis à la route soit constitué par le couple au niveau du moteur hydraulique et que la fonction de l'unité de commande de frein (118) puisse être contrôlée.

2. Simulateur hydraulique de glissement selon la revendication 1,
**caractérisé en ce que**
l'unité de commande de glissement (170) est réalisée de manière à déterminer le signal de commande (172) de la soupape de régulation de pression pour le couple de freinage transmissible sur la base de données stockées dans l'unité de commande de glissement (170) et concernant une caractéristique de surface de roulement ou sur la base de données stockées dans l'unité de commande de glissement et concernant une caractéristique des pneus.

3. Simulateur hydraulique de glissement selon la revendication 1 ou 2,
**caractérisé en ce que**
l'unité de commande de glissement (170) est réalisée de manière à modifier les données stockées concernant une caractéristique de surface de roulement ou les données stockées concernant une caractéristique des pneus.

4. Simulateur hydraulique de glissement selon l'une quelconque des revendications 1 à 3,
**caractérisé en ce que**
dans la première branche de circuit (150a) est disposé un premier capteur de flux (160) pour fournir un premier signal de flux (166) à l'unité de commande de glissement (170), et dans la deuxième branche de circuit (150b) est disposé un deuxième capteur de flux (162) pour fournir un deuxième signal de flux (168) à l'unité de commande de glissement (170), l'unité de commande de glissement (170) étant réalisée de manière à déterminer le signal de commande (172) de la soupape de régulation de pression (164) pour le couple de freinage transmissible en utilisant le premier signal de flux (166) et le deuxième signal de flux (168).

5. Simulateur hydraulique de glissement selon l'une quelconque des revendications 1 à 4,
**caractérisé en ce que**
la pompe hydraulique (154) est réalisée de manière à pouvoir faire varier une intensité du flux de liquide hydraulique dans le circuit hydraulique (150).

6. Simulateur hydraulique de glissement selon l'une quelconque des revendications 1 à 5,
**caractérisé en ce que**
le moteur hydraulique (158) présente en outre un capteur de couple (174) qui est réalisé de manière à détecter un couple de l'arbre d'entraînement (108) et **en ce que** la pompe hydraulique (154) est réalisée de manière à faire varier l'intensité du flux de liquide hydraulique en utilisant le couple détecté.

7. Simulateur hydraulique de glissement selon la revendication 6,
**caractérisé en ce que**
le moteur hydraulique (158) présente un intégrateur (178) qui est réalisé de manière à intégrer le signal de couple (176) détecté par le capteur de couple (174) et à ainsi déterminer la vitesse simulée du véhicule afin de faire varier avec ce signal l'intensité du flux de liquide hydraulique.

8. Simulateur hydraulique de glissement selon l'une quelconque des revendications 1 à 7,
**caractérisé en ce que**
le moteur hydraulique (158) est une unité hydraulique à piston axial.

9. Banc d'essai hydraulique de glissement
comprenant :
- un simulateur hydraulique de glissement (100) selon l'une quelconque des revendications 1 à 8, dans lequel on fixe sur l'arbre d'entraînement (108) une roue de véhicule (106) ; et
- une unité de stockage des données qui est réalisée de manière à enregistrer des données d'un comportement de commande de l'unité de commande de frein (118) pendant un fonctionnement du simulateur hydraulique de glissement (100).

10. Procédé pour faire fonctionner un simulateur hydraulique de glissement (100) selon l'une quelconque des revendications 1 à 8, pour contrôler une fonction d'une unité de commande de frein (118) dans le cas d'un comportement de glissement d'une chaîne de transmission, comprenant les étapes suivantes :
- provoquer le flux de liquide hydraulique dans le circuit hydraulique (150) ;
- exercer un couple sur l'arbre d'entraînement (108) du module de charge (102) au moyen du moteur hydraulique (158) dans la première branche de circuit (150a) ; et,
- en réponse au signal de commande (172) de la soupape de régulation de pression (164) pour le couple de freinage transmissible de l'unité de commande de glissement (170), régler la pression dans la deuxième branche de circuit (150b) et donc dans l'ensemble du système au moyen de la soupape de régulation de pression (164).
